# EUROPÄISCHE PATENTSCHRIFT

(11) **EP 3 134 792 B1**
(45) Veröffentlichungstag und Bekanntmachung des Hinweises auf die Patenterteilung: **01.04.2020**
(21) Anmeldenummer: 15703731.8
(22) Anmeldetag: 31.01.2015
(51) Int. Cl.: G05D 16/10

(54) **DRUCKREDUZIERVENTIL**
PRESSURE RELIEF VALVE
RÉDUCTEUR DE PRESSION

(30) Priorität: 22.04.2014 DE 202014003386 U
(43) Veröffentlichungstag der Anmeldung: 01.03.2017
(73) Patentinhaber: Neoperl GmbH, 79379 Müllheim (DE)
(72) Erfinder: FANGMEIER, Martin, 79424 Auggen (DE)
(74) Vertreter: Börjes-Pestalozza, Henrich
(86) Internationale Anmeldenummer: PCT/EP2015/000188
(87) Internationale Veröffentlichungsnummer: WO 2015/161905

(56) Entgegenhaltungen:
- EP-A1- 1 482 389
- US-A1- 2012 138 839

## Beschreibung

Die Erfindung betrifft ein Druckreduzierventil mit einem Ventilgehäuse, in dessen Gehäuseinnenraum ein Ventilträger vorgesehen ist, der wenigstens einen Durchströmkanal hat, und mit einem topfförmigen Ventilkörper, der von einer Offenstellung gegen eine Rückstellkraft in eine Schließstellung verschieblich geführt ist, in welcher Schließstellung der Ventilkörper mit dem Umfangsrand seiner Topfform derart an einem am Ventilträger vorgesehenen Ventilsitz anliegt, dass der Ventilkörper zumindest eine Kanalöffnung des wenigstens einen Durchströmkanals verschließt, wobei am Ventilträger oder am Ventilkörper mindestens eine Haltehülse angeordnet ist, an der ein Anschlag vorgesehen ist, der mit einem Gegenanschlag derart zusammenwirkt, dass in Offenstellung des Druckreduzierventils der Anschlag und der Gegenanschlag den Schiebeweg des Ventilkörpers relativ zum Ventilträger begrenzen, und wobei der Ventilträger einen Ventilträger-Abschnitt hat, an dem eine Ringdichtung vorgesehen ist, mit welcher der Ventilträger-Abschnitt dicht am Gehäuse-Innenumfang des Ventilgehäuses anliegt.

Zunehmend erfreuen sich solche sanitären Duschbrausen der Wertschätzung, die einen Duschkopf mit einer großformatigen Duschfläche aufweisen, welche eine Vielzahl vergleichsweise kleiner Brauseöffnungen trägt. Mit Hilfe solcher Duschbrausen lässt sich ein Brauseschauer erzeugen, die aus einer Vielzahl feiner fadenförmiger Einzelstrahlen gebildet ist. Nachteilig ist jedoch, dass sich die in ihrem lichten Querschnitt vergleichsweise kleinen Brauseöffnungen durch Kalk- und Schmutzablagerungen leicht verschließen können. Mit zunehmendem Verschließen der Brauseöffnungen steigt die Gefahr, dass das in den Duschkopf nachströmende Wasser dort einen Druck aufbaut, der zum Verformen und letztendlich zum Bruch des Duschkopfes führen kann. Um den Wasserdruck nicht derart ansteigen zu lassen, dass mit einem Bersten zumindest einzelner strömungsführender Bestandteile gerechnet werden muss, hat man bereits Druckreduzierventile geschaffen, die den Wasserdruck in dem vom Druckreduzierventil stromabwärts gelegenen Leitungsabschnitt auf einen festgelegten Maximalwert begrenzen.

So ist aus der EP 1 482 389 B1 bereits ein Druckreduzierventil der eingangs genannten Art bekannt, das in eine Wasserleitung einsetzbar ist. Das vorbekannte Druckreduzierventil weist ein Ventilgehäuse auf, in dessen Gehäuseinnenraum ein topfförmiger Ventilkörper vorgesehen ist. Das vorbekannte Druckreduzierventil hat einen Ventilträger, in dem wenigstens ein Durchströmkanal vorgesehen ist. Der topfförmige Ventilkörper ist unter dem Druck des durchströmenden Mediums von einer Offenstellung gegen eine Rückstellkraft in eine Schließstellung verschieblich geführt, in welcher Schließstellung der Ventilkörper mit dem Umfangsrand seiner Topfform derart an einem am Ventilträger vorgesehenen Ventilsitz anliegt, dass der Ventilkörper zumindest einen Kanalauslass des wenigstens einen Durchströmkanals verschließt. Übersteigt der Wasserdruck in dem vom Druckreduzierventil stromaufwärts gelegenen Leitungsabschnitt einen bestimmten Wasserdruck, wird der Ventilkörper derart über den Ventilträger geschoben und gedrückt, dass die zumindest eine Kanalöffnung des wenigstens einen Durchströmkanals zunehmend verschlossen wird. Dabei wirkt auf den Ventilkörper eine Rückstellkraft ein, die von einer Druckfeder oder von einem im Ventilkörper eingeschlossenen Gaspolster aufgebracht wird. Das vorbekannte Druckreduzierventil ist vielteilig und komplex aufgebaut. Aufgrund des als Rückstellkraft benötigten Rückstellelements besteht die Gefahr, dass der Ventilträger und der Ventilkörper auseinandergepresst werden und das vorbekannte Druckreduzierventil in seine Bestandteile zerfällt. Dadurch wird die Montage des vorbekannten Druckreduzierventils noch zusätzlich erschwert.

Es besteht daher insbesondere die Aufgabe, ein Druckreduzierventil der eingangs erwähnten Art zu schaffen, das sich durch eine vereinfachte Montage und gleichzeitig durch eine Vereinfachung der Arretierungsfunktion des Ventilkörpers auszeichnet.

Die erfindungsgemäße Lösung dieser Aufgabe besteht bei dem Druckreduzierventil der eingangs erwähnten Art insbesondere darin, dass in die mindestens eine Haltehülse jeweils ein Haltezapfen vorsteht, der am Ventilkörper oder am Ventilträger vorgesehen ist, und dass der Gegenanschlag am Außenumfang des Haltezapfens vorgesehen ist.

Das erfindungsgemäße Druckreduzierventil hat ein Ventilgehäuse, das in eine Fluidleitung einsetzbar oder zwischenschaltbar ist. Im Gehäuseinnenraum des Druckreduzierventils ist ein topfförmiger Ventilkörper vorgesehen. Auch das erfindungsgemäße Druckreduzierventil hat einen Ventilträger, in dem wenigstens ein Durchströmkanal vorgesehen ist. Der Ventilkörper ist unter dem Druck des durchströmenden Mediums von einer Offenstellung gegen die Rückstellkraft mindestens eines Rückstellelements in eine Schließstellung verschieblich geführt, in welcher Schließstellung der Ventilkörper mit dem Umfangsrand seiner Topfform derart an einem am Ventilträger vorgesehenen Ventilsitz anliegt, dass der Ventilkörper zumindest eine Kanalöffnung des wenigstens einen Durchströmkanals verschließt. Da der Ventilkörper bei steigendem Wasserdruck in dem vom Druckreduzierventil stromaufwärts gelegenen Leitungsabschnitt gegen die Rückstellkraft zunehmend in Richtung zum Ventilträger gedrückt wird, wird der Druck des Fluids in dem vom Druckreduzierventil stromabwärts gelegenen Leitungsabschnitt auf einen festgelegten Maximalwert begrenzt. Erfindungsgemäß ist am Ventilträger oder am Ventilkörper mindestens eine Haltehülse vorgesehen, in die ein am jeweils anderen Bauteil angeordneter Haltezapfen vorsteht. Am Innenumfang der Haltehülse ist ein Anschlag vorgesehen, der derart mit einem Gegenanschlag am Außenumfang des Haltezapfens zusammenwirkt, dass in Offenstellung des Druckreduzierventils der Anschlag und der Gegenanschlag den Schiebeweg des Ventilkörpers relativ zum Ventilträger begrenzen. Da der Anschlag und der mit ihm zusammenwirkende Gegenanschlag den Schiebeweg des Ventilkörpers relativ zum Ventilträger in die Offenstellung begrenzen, wird einem unbeabsichtigten Auseinanderfallen des erfindungsgemäßen Druckreduzierventils bei der Lagerung, beim Transport oder bei der Montage entgegengewirkt. Ventilträger, Ventilkörper und das zwischen ihnen wirksame Rückstellelement bilden somit praktisch eine Einsetzeinheit, die zur Vervollständigung des erfindungsgemäßen Druckreduzierventils nur noch in das Ventilgehäuse eingesetzt werden muss. Um den Ventilkörper funktionssicher am Ventilträger verschieblich zu führen, weist der Ventilträger einen Ventilträger-Abschnitt auf, an dem eine Ringdichtung vorgesehen ist, mit welcher der Ventilträger-Abschnitt dicht am Gehäuse-Innenumfang des Ventilgehäuses anliegt. Da am Ventilkörper-Abschnitt die Ringdichtung vorgesehen ist, kann das durchströmende Fluid das Druckreduzierventil im Bereich seines Ventilkörper-Abschnitts nur durch den zumindest einen Durchströmkanal passieren. Dadurch wird die Montage des erfindungsgemäßen Druckreduzierventils wesentlich vereinfacht und gleichzeitig auch eine Vereinfachung der Arretierungsfunktion des Ventilkörpers erreicht.

Um den Schiebeweg des Ventilkörpers relativ zum Ventilträger ausreichend lang bemessen zu können, ist es vorteilhaft, wenn der Anschlag am freien Stirnendbereich der Haltehülse angeordnet ist. Ein ausreichend lang bemessener Schiebeweg wird noch begünstigt, wenn der Gegenanschlag am freien Stirnendbereich des Haltezapfens angeordnet ist.

Die Funktion von Anschlag und Gegenanschlag wird auch durch ein Verdrehen von Ventilkörper und Ventilträger nicht beeinflusst, wenn der Anschlag und/oder der Gegenanschlag als umfangsseitig umlaufender Ringflansch oder Ringwulst ausgebildet ist/sind.

Um die Haltehülse und den Haltezapfen miteinander verbinden zu können, ist es vorteilhaft, wenn zumindest einer der Ringflansche eine sich zum freien Stirnende von Haltehülse und/ oder Haltezapfen hin verjüngende Auflaufschräge oder -flanke aufweist.

Eine sichere Funktionsweise des erfindungsgemäßen Druckreduzierventils wird begünstigt, wenn der Haltezapfen und die Haltehülse koaxial zueinander und zur Ventilgehäuse-Längsachse ausgerichtet sind.

Das als Rückstellkraft dienende Rückstellelement kann beispielsweise ein gummielastisches Bauteil sein. Eine besonders einfache und zweckmäßige Ausführungsform gemäß der Erfindung sieht jedoch vor, dass das als Rückstellkraft dienende, mindestens eine Rückstellelement eine Schrauben-Druckfeder ist. Diese Schrauben-Druckfeder kann besonders gut ihre Rückstellkraft entfalten, ohne dass Ventilkörper und Ventilträger gegeneinander verkantet werden, wenn die als Rückstellelement dienende, zumindest eine Schrauben-Druckfeder den Haltezapfen und die Haltehülse umgreift.

Eine bevorzugte Ausführungsform gemäß der Erfindung sieht vor, dass der Ventilträger-Abschnitt des Ventilträgers tellerförmig ausgebildet ist.

Damit der Ventilkörper mit steigendem Druck des Fluids zunehmend auf den Ventilkörper aufgeschoben und aufgepresst werden kann, ist es vorteilhaft, wenn der Ventilträger einen Führungsabschnitt hat, an welchem Führungsabschnitt der topfförmige Ventilkörper mit seinem Ventilkörper-Innenumfang verschieblich geführt ist.

Damit sich im Topfinneren des topfförmigen Ventilkörpers nicht ein übermäßig hoher Gegendruck aufbauen kann, ist es vorteilhaft, wenn am Führungsabschnitt eine Ringdichtung vorgesehen ist.

Eine bevorzugte Ausführungsform gemäß der Erfindung sieht vor, dass der Ventilkörper-Abschnitt und der Führungsabschnitt über einen Verbindungsabschnitt des Ventilträgers miteinander verbunden sind.

Dabei sieht eine bevorzugte Weiterbildung gemäß der Erfindung vor, dass an dem Verbindungsabschnitt die zumindest eine Kanalöffnung des wenigstens einen Durchströmkanals vorgesehen ist. Dabei ist es besonders vorteilhaft, wenn diese Kanalöffnung in Schließstellung des erfindungsgemäßen Druckreduzierventils von der Innenumfangswandung des topfförmigen Ventilkörpers verschlossen wird.

Besonders vorteilhaft ist es, wenn am Ventilkörper außenumfangsseitig wenigstens ein Gleitelement vorgesehen ist, das derart in radialer Richtung über den Ventilkörper vorsteht, dass zwischen dem Gehäuseinnenumfang des Ventilgehäuses einerseits und dem Außenumfang des Ventilkörper andererseits ein Ringkanal gebildet ist. Durch diesen Ringkanal kann das durchströmende Fluid bis zum Kanaleinlass des zumindest einen Durchströmkanals gelangen, um den Ventilträger anschließend durch diesen Durchströmkanal hindurch zu passieren. Weiterbildungen gemäß der Erfindung ergeben sich aus den Figuren in Verbindung mit der Beschreibung sowie den Ansprüchen. Nachstehend wird die Erfindung anhand eines bevorzugten Ausführungsbeispieles noch näher:beschrieben.

Es zeigt:
- Figur 1: ein im Längsschnitt dargestelltes Druckreduzierventil mit einem Ventilgehäuse, in dessen Gehäuseinnenraum ein topfförmiger Ventilkörper vorgesehen ist und mit einem Ventilträger, wobei der Ventilkörper sich hier in einer Offenstellung des Druckreduzierventils befindet,
- Figur 2: das Druckreduzierventil aus Figur 1 in einer Zwischenstellung von Ventilkörper und Ventilträger,
- Figur 3: das Druckreduzierventil aus Figur 1 und 2 in seiner Schließstellung, in welcher Schließstellung der topfförmige Ventilkörper an einem Ventilsitz des Ventilträgers dicht anliegt,
- Figur 4: das in seiner Offenstellung gezeigte Druckreduzierventil aus Figur 1 bis 3 in einem Teil-Längsschnitt,
- Figur 5: das ebenfalls in einem Teil-Längsschnitt dargestellte Druckreduzierventil aus den Figuren 1 bis 4 in seiner Schließstellung,
- Figur 6: die aus dem topfförmigen Ventilkörper, dem Ventilträger und einem Rückstellelement gebildete Einheit des in den Figuren 1 bis 5 dargestellten Druckreduzierventils in einem Teil-Längsschnitt,
- Figur 7: einen Detail-Längsschnitt des Druckreduzierventils aus den Figuren 1 bis 6 im Bereich einer Haltehülse, die mit einem Haltezapfen zusammenwirkt, wobei Haltehülse und Haltezapfen den Ventilträger und den Ventilkörper in ihrer Offenstellung aneinander halten, und
- Figur 8: das Druckreduzierventil aus den Figuren 1 bis 7 in einer auseinandergezogenen Einzelteildarstellung.

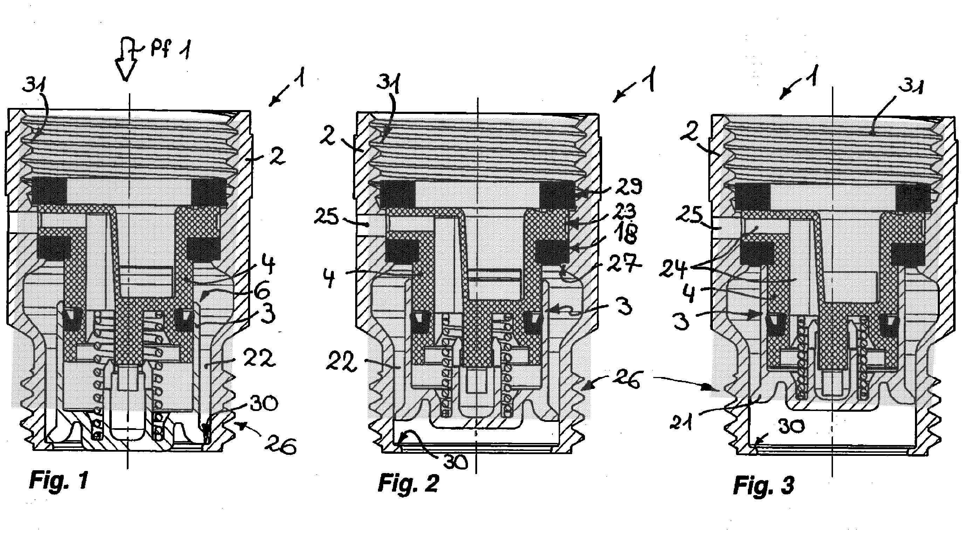

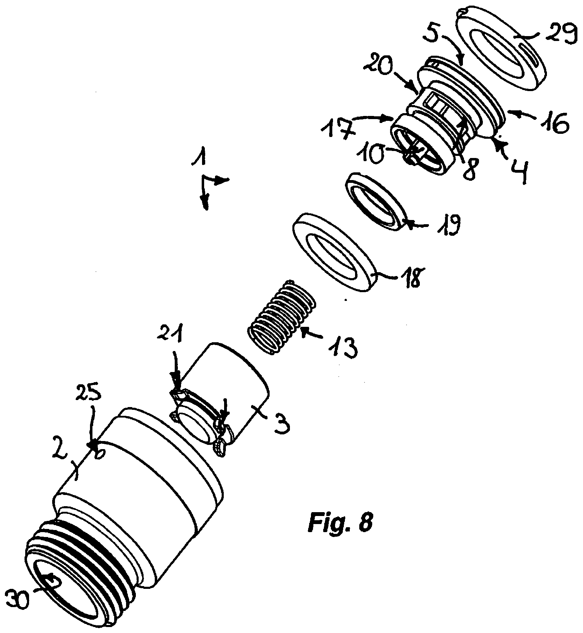

In den Figuren 1 bis 8 ist ein in Pfeilrichtung Pf1 durchströmtes Druckreduzierventil 1 dargestellt, das beispielsweise in eine Wasserleitung einsetzbar ist, um den Wasserdruck in dem vom Druckreduzierventil stromabwärts gelegenen Leitungsabschnitt auf einen festgelegten Maximalwert zu begrenzen. Das Druckreduzierventil 1 hat ein Ventilgehäuse 2, das in eine Fluidleitung einsetzbar oder zwischenschaltbar ist. Im Gehäuseinnenraum des Ventilgehäuses 1 ist ein topfförmiger Ventilkörper 3 vorgesehen. Das Druckreduzierventil 1 hat einen Ventilträger 4, in dem wenigstens ein Durchströmkanal 5 vorgesehen ist. Verengt sich der Leitungsquerschnitt im stromabwärts gelegenen Leitungsabschnitt und steigt dort der Wasserdruck zunehmend, wird der verschieblich geführte Ventilkörper 3 unter dem Druck des durchströmenden Mediums von einer in Figur 1 gezeigten Offenstellung gegen die Rückstellkraft mindestens eines Rückstellelements in eine in Figur 3 gezeigte Schließstellung bewegt, in welcher Schließstellung der Ventilkörper 3 mit dem Umfangsrand 6 seiner Topfform derart an einem am Ventilträger 4 vorgesehenen Ventilsitz 7 anliegt, dass der Ventilkörper 3 zumindest eine Kanalöffnung 8 des wenigstens einen Durchströmkanals 5 verschließt. Da der Ventilkörper 3 bei steigendem Wasserdruck in dem vom Druckreduzierventil 1 stromaufwärts gelegenen Leitungsabschnitt gegen die Rückstellkraft des zumindest einen Rückstellelements zunehmend in Richtung zum Ventilträger 4 gedrückt wird und damit an der hiermit kleiner werdenden Kanalöffnung 8 der Druckverlust steigt, wird der Druck des Fluids in dem vom Druckreduzierventil stromabwärts gelegenen Leitungsabschnitt auf einen festgelegten Maximalwert begrenzt.

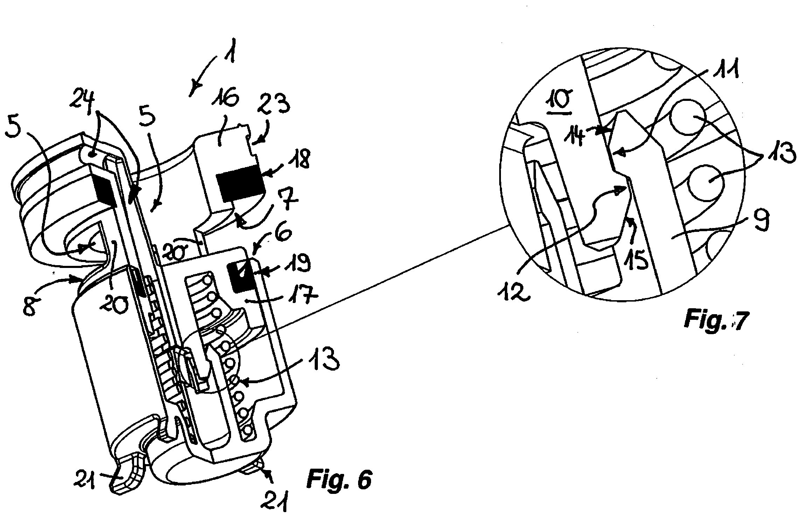

In den Figuren 6 und 7 ist besonders gut erkennbar, dass am Topfboden des Ventilkörpers 3 stirninnenseitig eine zentrale Haltehülse 9 vorgesehen ist, in die ein am Ventilträger 4 angeordneter Haltezapfen 10 vorsteht. Am Innenumfang der Haltehülse 9 ist ein Anschlag 11 vorgesehen, der derart mit einem Gegenanschlag 12 am Außenumfang des Haltezapfens 10 zusammenwirkt, dass in Offenstellung des Druckreduzierventils 1 der Anschlag 11 und der Gegenanschlag 12 den Schiebeweg des Ventilkörpers 3 relativ zum Ventilträger 4 begrenzen. Da der Anschlag 11 und der mit ihm zusammenwirkende Gegenanschlag 12 den Schiebeweg des Ventilkörpers 3 relativ zum Ventilträger 4 in die Offenstellung begrenzen, wird einem unbeabsichtigten Auseinanderfallen des hier dargestellten Druckreduzierventils 1 bei der Lagerung, beim Transport oder bei der Montage entgegengewirkt. Ventilträger 4, Ventilkörper 3 und das zwischen ihnen wirksame Rückstellelement bilden nebst den dazugehörigen Ringdichtungen 18, 19 praktisch eine Einsetzeinheit, die zur Vervollständigung des Druckreduzierventils 1 nur noch in das Ventilgehäuse 2 eingesetzt werden muss. Dadurch wird die Montage des hier dargestellten Druckreduzierventils 1 wesentlich vereinfacht.

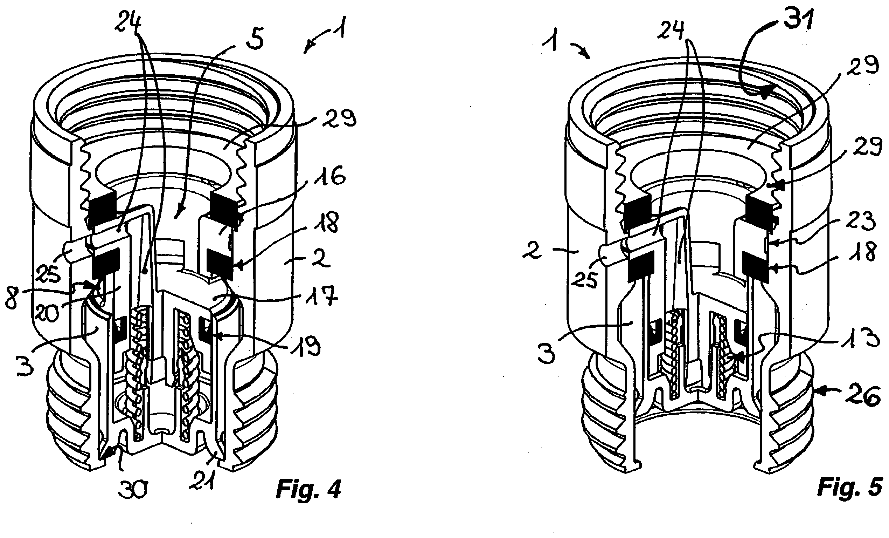

In den Figuren 4 bis 7 ist erkennbar, dass das mindestens eine Rückstellelement hier als Schrauben-Druckfeder 13 ausgebildet ist. Dabei umgreift die als Rückstellelement dienende Schrauben-Druckfeder 13 den Haltezapfen 10 und die Haltehülse 9. Der Haltezapfen 10 und die Haltehülse 9 sind koaxial zueinander und zur Ventilgehäuse-Längsachse ausgerichtet. In Figur 7 ist erkennbar, dass der Anschlag 11 am freien Stirnendbereich der Haltehülse 9 angeordnet ist. Um den Schiebeweg des am Ventilträger 4 verschieblich geführten Ventilkörpers ausreichend lang bemessen zu können, ist auch der Gegenanschlag 12 am freien Stirnendbereich des Haltezapfens 10 angeordnet. Um die Funktion des Druckreduzierventils 1 nicht zu beeinträchtigen, selbst wenn eine Relativverdrehung von Ventilkörper 3 und Ventilträger 4 erfolgt, sind der Anschlag 11 und der Gegenanschlag 12 jeweils als umfangsseitig umlaufender Ringflansch oder Ringwulst ausgebildet.

Sowohl der am Innenumfang der Haltehülse 9 vorgesehene Anschlag 11 als auch der am Außenumfang des Haltezapfens 10 angeordnete Gegenanschlag 12 weisen eine sich zum freien Stirnende von Haltehülse 9 beziehungsweise Haltezapfen 10 hin verjüngende Auflaufschräge oder Auflaufflanke 14, 15 auf. In Figur 7 ist dargestellt, dass der an der Haltehülse 9 vorgesehene Anschlag 11 sowie der am Haltezapfen 10 seitlich vorstehende Gegenanschlag 12 einander derart hintergreifen, dass der Ventilkörper 3 und der Ventilträger 4 in der Offenstellung des Druckreduzierventils 1 aneinander gehalten sind.

Aus Figur 6 wird deutlich, dass der Ventilträger 4 einen Ventilträger-Abschnitt 16 hat, welcher Ventilträger-Abschnitt 16 am Gehäuse-Innenumfang des Ventilgehäuses 2 dicht anliegt und welcher in Gebrauchsstellung des Druckreduzierventils 1 im Gehäuseinneren des Ventilgehäuses 2 unverrückbar gehalten ist. Dieser Ventilträger-Abschnitt 16 ist im Wesentlichen tellerförmig ausgebildet.

Der Ventilträger 4 hat einen Führungsabschnitt 17, an welchem Führungsabschnitt 17 der Ventilkörper 3 mit seinem Ventilkörper-Innenumfang verschieblich geführt ist. Dieser Führungsabschnitt 17 des Ventilträgers 4 weist an seiner zum Ventilkörper-Innenraum gerichteten Stirnfläche die Haltehülse oder - wie hier - den Haltezapfen 10 auf.

Damit das durchströmende Fluid das Druckreduzierventil nur durch den zumindest einen Durchströmkanal 5 hindurch passieren kann, ist am Ventilkörper-Abschnitt 16 eine Ringdichtung 18 vorgesehen, mit welcher dieser Ventilkörper-Abschnitt 16 dicht am Gehäuseinnenumfang des Ventilgehäuses 2 anliegt. Auch am Führungsabschnitt 17 des Ventilträgers 4 ist eine Ringdichtung 19 angeordnet, die das Topfinnere des topfförmigen Ventilkörpers gegenüber dem durchströmenden Fluid abdichtet. Dabei liegt die Ringdichtung 19 dicht am Topf-Innenumfang des Ventilkörpers 3 an. In Figur 6 ist erkennbar, dass der Ventilkörper-Abschnitt 16 und der Führungsabschnitt 17 des Ventilträgers 4 über einen Verbindungsabschnitt 20 verbunden sind. An diesem Verbindungsabschnitt 20 ist hier die zumindest eine Kanalöffnung 8 des Durchströmkanals 5 angeordnet. Dabei ist der Verbindungsabschnitt 20 derart konturiert oder weist einen derartigen Durchmesser auf, dass die Kanalöffnung 8 in der Schließstellung des Druckreduzierventils 1 von der Topf-Innenumfangswandung des topfförmigen Ventilkörpers 3 verschlossen wird.

Aus einem Vergleich der Figuren 4 bis 6 wird deutlich, dass am Ventilkörper 3 außenumfangsseitig wenigstens ein Gleitelement und hier vier, in Umfangsrichtung gleichmäßig voneinander beabstandete Gleitelemente 21 vorgesehen sind, die in radialer Richtung derart über den Ventilkörper 3 vorstehen, dass zwischen dem Gehäuseinnenumfang des Ventilgehäuses 2 einerseits und dem Außenumfang des Ventilkörpers 3 andererseits ein Ringkanal 22 gebildet ist. Da der Ventilkörper 3 nur mit seinen seitlich vorstehenden Gleitelementen 21 am Gehäuseinnenumfang des Ventilgehäuses 2 gleitet, wird die Reibungsfläche des Ventilkörpers 3 wirkungsvoll reduziert. Die Gleitelemente 21 liegen in der Offenstellung des Ventils 1 an einem Ringabsatz 30 am Gehäuseinnenumfang des Ventilgehäuses 2 an.

Aus einem Vergleich der Figuren 4 bis 6 wird deutlich, dass am Außenumfang des Ventilkörper-Abschnitts 16 eine Ringnut 23 vorgesehen ist. Diese Ringnut 23 ist über zumindest einen Belüftungskanal 24 mit dem Topfinnenraum des topfförmigen Ventilkörpers 3 verbunden. Im Ventilgehäuse 2 des Druckreduzierventils 1 ist zumindest eine Belüftungsöffnung 25 vorgesehen, die in der Ringnut 23 mündet. Während der Schiebebewegungen des Ventilkörpers 3 kann die im Topfinnenraum des topfförmigen Ventilkörpers 3 gefangene Luft über den Belüftungskanal 24 und die Belüftungsöffnung 25 entweichen. Auf diese Weise wird verhindert, dass sich im Topfinnenraum des Ventilkörpers 3 ein unerwünschter Gegendruck aufbauen kann, wenn der Druck des auslassseitigen Fluids den Ventilkörper 3 auf den Führungsabschnitt 17 des Ventilträgers 4 drückt.

Das Ventilgehäuse 2 weist auf seiner Zuströmseite ein Außengewinde 26 und auf seiner Abströmseite ein komplementäres Innengewinde 31 auf. Das Ventilgehäuse 2 kann zum Beispiel auf den Schlauchanschluss einer flexiblen Schlauchleitung zuströmseitig aufgeschraubt werden, um diese flexible Schlauchleitung vor einem überhohen Druck des Fluids und vor einem druckbedingten Bersten zu schützen. Dabei wird der Ventilträger 4 mit seinem Ventilträger-Abschnitt 16 zwischen einem am Gehäuseinnenumfang des Ventilgehäuses 2 angeordneten Ringabsatz 27 und dem hier nicht weiter dargestellten Schlauchanschluss der flexibilen schlauchleitung fest eingespannt. Damit ein Passieren des durchströmenden Wassers nur im Bereich des zumindest einen Durchströmkanals 5 sichergestellt wird, ist beidseits des Ventilträger-Abschnitts 16 eine Ringdichtung 18, 29 vorgesehen. Möglich ist auch, das hier dargestellte Druckreduzierventil 1 zwischen dem Brauseteller einer Kopfbrause und dem Wasseranschluss anzubringen, um den Brauseteller gegen übermäßige Belastungen bei einer Verkalkung im Bereich der Brauseauslassöffnungen zu schützen.

### Bezugszeichenliste

- 1: Druckreduzierventil
- 2: Ventilgehäuse
- 3: Ventilkörper
- 4: Ventilträger
- 5: Durchströmkanal
- 6: Umfangsrand
- 7: Ventilsitz
- 8: Kanalöffnung
- 9: Haltehülse
- 10: Haltezapfen
- 11: Anschlag
- 12: Gegenanschlag
- 13: Druckfeder
- 14: Auflaufflanke
- 15: Auflaufflanke
- 16: Ventilträger-Abschnitt
- 17: Führungsabschnitt
- 18: Ringdichtung
- 19: Ringdichtung
- 20: Verbindungsabschnitt
- 21: Gleitelement
- 22: Ringkanal
- 23: Ringnut
- 24: Belüftungskanal
- 25: Belüftungsöffnung
- 26: Außengewinde
- 27: Ringabsatz
- 29: Ringdichtung
- 30: Ringabsatz
- 31: Innengewinde

## Patentansprüche

1. Druckreduzierventil (1) mit einem Ventilgehäuse (2), in dessen Gehäuseinnenraum ein Ventilträger (4) vorgesehen ist, der wenigstens einen Durchströmkanal (5) hat, und mit einem topfförmigen Ventilkörper (3), der von einer Offenstellung gegen eine Rückstellkraft in eine Schließstellung verschieblich geführt ist, in welcher Schließstellung der Ventilkörper (3) mit dem Umfangsrand (6) seiner Topfform derart an einem am Ventilträger (4) vorgesehenen Ventilsitz (7) anliegt, dass der Ventilkörper (3) zumindest eine Kanalöffnung (8) des wenigstens einen Durchströmkanals (5) verschließt, wobei am Ventilträger (4) oder am Ventilkörper (3) mindestens eine Haltehülse (9) angeordnet ist, an der ein Anschlag (11) vorgesehen ist, der mit einem Gegenanschlag (12) derart zusammenwirkt, dass in Offenstellung des Druckreduzierventils (1) der Anschlag (11) und der Gegenanschlag (12) den Schiebeweg des Ventilkörpers (3) relativ zum Ventilträger (4) begrenzen, und wobei der Ventilträger (4) einen Ventilträger-Abschnitt (16) hat, an dem eine Ringdichtung (18) vorgesehen ist, mit welcher der Ventilträger-Abschnitt (16) dicht am Gehäuse-Innenumfang des Ventilgehäuses (2) anliegt, **dadurch gekennzeichnet, dass** in die mindestens eine Haltehülse (9) jeweils ein Haltezapfen (10) vorsteht, der am Ventilkörper (3) oder am Ventilträger (4) vorgesehen ist, und dass der Gegenanschlag (12) am Außenumfang des Haltezapfens (10) vorgesehen ist.

2. Druckreduzierventil nach Anspruch 1, **dadurch gekennzeichnet, dass** der Anschlag (11) am freien Stirnendbereich der Haltehülse (9) angeordnet ist.

3. Druckreduzierventil nach Anspruch 1 oder 2, **dadurch gekennzeichnet, dass** der Gegenanschlag (12) am freien Stirnendbereich des Haltezapfens (10) angeordnet ist.

4. Druckreduzierventil nach einem der Ansprüche 1 bis 3, **dadurch gekennzeichnet, dass** der Anschlag (11) und/oder der Gegenanschlag (12) als umfangsseitig umlaufender Ringflansch oder Ringwulst ausgebildet ist/sind.

5. Druckreduzierventil nach Anspruch 4, **dadurch gekennzeichnet, dass** zumindest einer der Ringflansche eine sich zum freien Stirnende von Haltehülse (9) und/oder Haltezapfen (10) hin verjüngende Auflaufschräge oder - flanke (14; 15) aufweist.

6. Druckreduzierventil nach einem der Ansprüche 1 bis 5, **dadurch gekennzeichnet, dass** der Haltezapfen (10) und die Haltehülse (9) koaxial zueinander und zur Ventilgehäuse-Längsachse ausgerichtet sind.

7. Druckreduzierventil nach einem der Ansprüche 1 bis 6, **dadurch gekennzeichnet, dass** das mindestens eine Rückstellelement eine Schrauben-Druckfeder (13) ist.

8. Druckreduzierventil nach Anspruch 7, **dadurch gekennzeichnet, dass** die als Rückstellelement dienende Schrauben-Druckfeder (13) den Haltezapfen (10) und die Haltehülse (9) umgreift.

9. Druckreduzierventil nach einem der Ansprüche 1 bis 8, **dadurch gekennzeichnet, dass** der Ventilträger-Abschnitt (16) des Ventilträgers (4) tellerförmig ausgebildet ist.

10. Druckreduzierventil nach einem der Ansprüche 1 bis 9, **dadurch gekennzeichnet, dass** der Ventilträger (4) einen Führungsabschnitt (17) hat, an welchem Führungsabschnitt (17) der topfförmige Ventilkörper (3) mit seinem Ventilkörper-Innenumfang verschieblich geführt ist.

11. Druckreduzierventil nach Anspruch 10, **dadurch gekennzeichnet, dass** am Führungsabschnitt (17) eine Ringdichtung (19) vorgesehen ist.

12. Druckreduzierventil nach Anspruch 10 oder 11, **dadurch gekennzeichnet, dass** der Ventilträger-Abschnitt (16) und der Führungsabschnitt (17) des Ventilträgers (4) über einen Verbindungsabschnitt (20) verbunden sind.

13. Druckreduzierventil nach einem der Ansprüche 1 bis 12, **dadurch gekennzeichnet, dass** an dem Verbindungsabschnitt (20) die zumindest eine Kanalöffnung (8) des wenigstens einen Durchströmkanals (5) vorgesehen ist.

14. Druckreduzierventil nach einem der Ansprüche 1 bis 13, **dadurch gekennzeichnet, dass** am Ventilkörper (3) außenumfangsseitig wenigstens ein Gleitelement (21) vorgesehen ist, welches zumindest ein Gleitelement (21) derart in radialer Richtung über den Ventilkörper (3) vorsteht, dass zwischen dem Gehäuseinnenumfang des Ventilgehäuses (2) einerseits und dem Außenumfang des Ventilkörpers (3) andererseits ein Ringkanal (22) gebildet ist.

## Claims

1. A pressure-reducing valve (1) comprising a valve housing (2), in a housing interior of which is provided a valve carrier (4) which has at least one through-flow channel (5), and comprising a pot-shaped valve body (3) which is guided displaceably from an open position into a closed position in opposition to a restoring force, in which closed position the valve body (3) abuts by way of the circumferential edge (6) of its pot shape in such a manner against a valve seat (7), which is provided on the valve carrier (4), that the valve body (3) closes at least one channel opening (8) of the at least one through-flow channel (5), wherein at least one retaining sleeve (9) is arranged on the valve carrier (4) or on the valve body (3), on which at least one retaining sleeve a stop (11) is provided which interacts with a counter stop (12) in such a manner that in the open position of the pressure-reducing valve (1) the stop (11) and the counter stop (12) delimit the sliding distance of the valve body (3) relative to the valve carrier (4), and wherein the valve carrier (4) has a valve carrier portion (16), on which is provided an annular seal (18) by which the valve carrier portion (16) abuts sealingly against the housing inside circumference of the valve housing (2), wherein a retaining pin (10), which is provided on the valve body (3) or on the valve carrier (4), in each case protrudes into the at least one retaining sleeve (9), and in that the counter stop (12) is provided on the outside circumference of the retaining pin (10).

2. The pressure-reducing valve as claimed in claim 1, wherein the stop (11) is arranged on the free end face region of the retaining sleeve (9).

3. The pressure-reducing valve as claimed in claim 1 or 2, wherein the counter stop (12) is arranged on the free end face region of the retaining pin (10).

4. The pressure-reducing valve as claimed in one of claims 1 to 3, wherein the stop (11) and/or the counter stop (12) is/are formed as an annular flange or annular bead running in encircling fashion on the circumference.

5. The pressure-reducing valve as claimed in claim 4, wherein at least one of the annular flanges comprises a run-up gradient or run-up flank (14; 15) which tapers toward the free end face of the retaining sleeve (9) and/or of the retaining pin (10).

6. The pressure-reducing valve as claimed in one of Claims 1 to 5, wherein the retaining pin (10) and the retaining sleeve (9) are aligned coaxially with respect to one another and to the valve housing longitudinal axis.

7. The pressure-reducing valve as claimed in one of claims 1 to 6, wherein the least one restoring element is a helical compression spring (13).

8. The pressure-reducing valve as claimed in claim 7, wherein the helical compression spring (13) serving as a restoring element engages around the retaining pin (10) and the retaining sleeve (9).

9. The pressure-reducing valve as claimed in one of claims 1 to 8, wherein the valve carrier portion (16) of the valve carrier (4) is formed with a plate-shape.

10. The pressure-reducing valve as claimed in one of claims 1 to 9, wherein the valve carrier (4) has a guide portion (17), on which guide portion (17) the pot-shaped valve body (3) is displaceably guided by way of its valve body inside circumference.

11. The pressure-reducing valve as claimed in claim 10, wherein an annular seal (19) is provided on the guide portion (17).

12. The pressure-reducing valve as claimed in claim 10 or 11, wherein the valve carrier portion (16) and the guide portion (17) of the valve carrier (4) are connected by a connection portion (20).

13. The pressure-reducing valve as claimed in one of claims 1 to 12, wherein the at least one channel opening (8) of the at least one through-flow channel (5) is provided on the connection portion (20).

14. The pressure-reducing valve as claimed in one of claims 1 to 13, wherein at least one sliding element (21) is provided on an outside circumference of the valve body (3), which at least one sliding element (21) protrudes in a radial direction beyond the valve body (3) such that an annular channel (22) is formed between the housing inside circumference of the valve housing (2) on the one hand and the outside circumference of the valve body (3) on the other hand.

## Revendications

1. Réducteur de pression (1) avec un boîtier de soupape (2), dans l'espace intérieur de boîtier duquel il est prévu un support de soupape (4), qui comporte au moins un canal d'écoulement (5), et avec un corps de soupape en forme de pot (3), qui est guidé de façon déplaçable d'une position ouverte à une position fermée contre une force de rappel, position fermée dans laquelle le corps de soupape (3) s'applique avec le bord périphérique (6) de sa forme de pot sur un siège de soupape (7) prévu sur le support de soupape (4), de telle manière que le corps de soupape (3) ferme au moins une ouverture de canal (8) dudit au moins un canal d'écoulement (5), dans lequel au moins une douille de maintien (9) est disposée sur le support de soupape (4) ou sur le corps de soupape (3), sur laquelle il est prévu une butée (11) qui coopère avec une contrebutée (12) de telle manière qu'en position ouverte du réducteur de pression (1), la butée (11) et la contrebutée (12) limitent la course de déplacement du corps de soupape (3) par rapport au support de soupape (4), et dans lequel le support de soupape (4) comporte une partie de support de soupape (16), sur laquelle il est prévu un joint annulaire (18), avec lequel la partie de support de soupape (16) s'applique de façon étanche sur la périphérie intérieure de boîtier du boîtier de soupape (2), **caractérisé en ce qu'**un tenon de maintien (10), qui est prévu sur le corps de soupape (3) ou sur le support de soupape (4), pénètre respectivement dans ladite au moins une douille de maintien (9) et **en ce que** la contrebutée (12) est prévue à la périphérie extérieure du tenon de maintien (10).

2. Réducteur de pression selon la revendication 1, **caractérisé en ce que** la butée (11) est disposée sur la région d'extrémité frontale libre de la douille de maintien (9).

3. Réducteur de pression selon une revendication 1 ou 2, **caractérisé en ce que** la contrebutée (12) est disposée sur la région d'extrémité frontale libre du tenon (10).

4. Réducteur de pression selon l'une quelconque des revendications 1 à 3, **caractérisé en ce que** la butée (11) et/ou la contrebutée (12) est/sont réalisée(s) sous la forme d'une bride annulaire ou d'un bourrelet annulaire courant en périphérie.

5. Réducteur de pression selon la revendication 4, **caractérisé en ce qu'**au moins une des brides annulaires présente un chanfrein ou un flanc d'entrée (14; 15) s'amincissant en direction de l'extrémité frontale libre de la douille de maintien (9) et/ou du tenon de maintien (10).

6. Réducteur de pression selon l'une quelconque des revendications 1 à 5, **caractérisé en ce que** le tenon de maintien (10) et la douille de maintien (9) sont orientés de façon coaxiale l'un à l'autre et à l'axe longitudinal du boîtier de soupape.

7. Réducteur de pression selon l'une quelconque des revendications 1 à 6, **caractérisé en ce que** ledit au moins un élément de rappel est un ressort de pression hélicoïdal (13).

8. Réducteur de pression selon la revendication 7, **caractérisé en ce que** le ressort de pression hélicoïdal (13) servant d'élément de rappel entoure le tenon de maintien (10) et la douille de maintien (9).

9. Réducteur de pression selon l'une quelconque des revendications 1 à 8, **caractérisé en ce que** la partie de support de soupape (16) du support de soupape (4) est réalisée en forme d'assiette.

10. Réducteur de pression selon l'une quelconque des revendications 1 à 9, **caractérisé en ce que** le support de soupape (4) comporte une partie de guidage (17), partie de guidage (17) sur laquelle le corps de soupape en forme de pot (3) est guidé de façon déplaçable avec sa périphérie intérieure de corps de soupape.

11. Réducteur de pression selon la revendication 10, **caractérisé en ce qu'**il est prévu un joint annulaire (19) sur la partie de guidage (17).

12. Réducteur de pression selon une revendication 10 ou 11, **caractérisé en ce que** la partie de support de soupape (16) et la partie de guidage (17) du support de soupape (4) sont reliées par une partie de liaison (20).

13. Réducteur de pression selon l'une quelconque des revendications 1 à 12, **caractérisé en ce que** ladite au moins une ouverture de canal (8) dudit au moins un canal d'écoulement (5) est prévue sur la partie de liaison (20).

14. Réducteur de pression selon l'une quelconque des revendications 1 à 13, **caractérisé en ce qu'**il est prévu sur le corps de soupape (3), du côté de la périphérie extérieure, au moins un élément glissant (21), ledit au moins un élément glissant (21) étant saillant en direction radiale au-delà du corps de soupape (3), de telle manière qu'un canal annulaire (22) soit formé entre la périphérie intérieure de boîtier du boîtier de soupape (2), d'une part, et la périphérie extérieure du corps de soupape (3), d'autre part.
